# EUROPÄISCHE PATENTSCHRIFT

(11) **EP 2 650 196 B1**
(45) Veröffentlichungstag und Bekanntmachung des Hinweises auf die Patenterteilung: **13.06.2018**
(21) Anmeldenummer: 13001747.8
(22) Anmeldetag: 05.04.2013
(51) Int. Cl.: B62D 33/06

(54) **Fahrerdach für Bedienstand einer Straßenbaumaschine**
Roof for the operator's cabin of a road construction machine
Toit de cabine pour poste de commande d'une machine de construction de chaussée

(30) Priorität: 12.04.2012 DE 202012003669 U
(43) Veröffentlichungstag der Anmeldung: 16.10.2013
(73) Patentinhaber: Joseph Vögele AG, 67067 Ludwigshafen (DE)
(72) Erfinder: Herzberg, Ingo, 74918 Angelbachtal (DE); Schmidt, Thomas, 68723 Plankstadt (DE)
(74) Vertreter: Grünecker Patent- und Rechtsanwälte PartG mbB

(56) Entgegenhaltungen:
- EP-A1- 0 151 332
- EP-A1- 1 008 504
- EP-A2- 1 008 493
- DE-U- 7 427 457
- DE-U1- 20 000 993
- FR-A1- 2 339 711
- US-B1- 6 322 133
- US-E1- R E43 249
- US-S1- D 554 158

## Beschreibung

Die vorliegende Erfindung bezieht sich auf ein Fahrerdach für einen Bedienstand einer Straßenbaumaschine, bei der es sich insbesondere um einen Straßenfertiger oder um einen Beschicker für eine Straßenbaumaschine handeln kann.

Straßenbaumaschinen werden unabhängig von der jeweils herrschenden Witterung eingesetzt. Dadurch ist das Bedienpersonal dieser Straßenbaumaschinen der Witterung stets ausgesetzt. Durch den Einsatz von Fahrerschutzdächern beziehungsweise Fahrerdächern wird jedoch ein weitgehender Schutz des auf dem Fahrerstand der Straßenbaumaschine befindlichen Bedienpersonals geboten.

Die gattungsgemässe EP 1 008 504 A1 offenbart einen aus mehreren Baugruppen bestehenden Führerstandraum eines Schienenfahrzeugs. Dabei ist ein oberes Ende zweier sich hauptsächlich vertikal erstreckender gegenüberliegender Seitenwände des Führerstandsraums jeweils in horizontaler Richtung auf die gegenüberliegende Seitenwand abgebogen. Ein Dachelement ist zwischen den Seitenwandelementen vorgesehen und wird an deren oberen Enden angebracht. Das Dachelement soll breitenvariabel ausgeführt sein, um für Bauarten verschiedener Schienenfahrzeuge eingesetzt werden zu können.

Die FR 2 339 711 A1 offenbart eine Führerkabine für einen bremsgelenkten Lader. Diese besteht aus zwei symmetrischen Teilen, die entlang einer Mittellinie des Fahrzeuges zusammengesetzt werden. Jeder der Teile umfasst dabei eine Seitenwand sowie eine Hälfte des Daches. Die beiden Dachhälften sind mittels einer Schweißnaht verbunden.

Aufgabe der Erfindung ist es, ein hinsichtlich der Effizienz seiner Herstellung verbessertes Fahrerdach zur Verfügung zu stellen.

Diese Aufgabe wird gelöst durch ein Fahrerdach mit den Merkmalen des Anspruchs 1 beziehungsweise durch ein Baukastensystem zum Herstellen eines Fahrerdachs mit den Merkmalen des Anspruchs 15. Vorteilhafte Weiterbildungen sind in den Unteransprüchen angegeben.

Das erfindungsgemäße Fahrerdach umfasst ein erstes Dachmodul und ein zweites Dachmodul. Diese können entweder fest oder lösbar zur Bildung eines gemeinsamen Daches miteinander verbunden sein. Zwar wirkt dies auf den ersten Blick komplizierter als die herkömmliche Herstellung eines einstückigen Fahrerdaches. Tatsächlich bietet die Erfindung jedoch für die Effizienz der Herstellung entscheidende Vorteile. So können, wie nachfolgend genauer erläutert wird, aus gleichen Dachmodulen leicht unterschiedlich gestaltete Fahrerdächer für verschiedene Typen von Straßenbaumaschinen hergestellt werden. Damit wird die Lagerhaltung erleichtert, weil nicht mehr für sämtliche Typen von Straßenbaumaschinen jeweils eigene, komplette Fahrerdächer vorgehalten werden müssen. Zudem sind die einzelnen Dachmodule kleiner als ein gesamtes Fahrerdach, was die Lagerhaltung weiter vereinfacht.

Besonders effizient ist es für die Herstellung, wenn die beiden Dachmodule spiegelbildlich zueinander sind, weil dann ähnliche Werkzeuge und Bedingungen für die Herstellung der beiden Dachmodule eingesetzt werden können.

Zweckmäßigerweise umfasst jedes Dachmodul einen Dachabschnitt und mindestens einen, vorzugsweise drei gegenüber dem Dachabschnitt abgewinkelte Seitenabschnitte. Die Seitenabschnitte können beispielsweise nach unten vom Dachabschnitt abstehen und bieten zusätzlichen Schutz gegen Sonne und Regen.

Der Einsatz des Fahrerdaches kann flexibler werden, wenn ein Dachmodul mindestens ein zwischen einer eingeschobenen und einer ausgefahrenen Stellung bewegbares Ausziehteil umfasst. Dieses Ausziehteil (auch als Markise bezeichnet) kann vorzugsweise in wenigstens einer Stellung verriegelbar sein, beispielsweise in der eingeschobenen Stellung. Zur Verriegelung können herkömmliche Riegelsysteme, wie ein Schnappverschluss oder ein Kofferraumverschluss verwendet werden.

Die Effizienz der Herstellung von Fahrerdächern für unterschiedliche Typen von Straßenbaumaschinen kann erheblich vereinfacht werden, wenn ein Zwischenteil zwischen die beiden Dachmodule eingefügt ist. Dieses Zwischenteil kann entweder fest oder lösbar zwischen die beiden Dachmodule eingefügt sein.

Noch weiter wird die Effizienz der Herstellung verschieden gestalteter Fahrerdächer verbessert, wenn mehrere gegeneinander austauschbare und zwischen die beiden Dachmodule einsetzbare Zwischenteile unterschiedlicher Konfiguration oder Breite vorhanden sind. Je nach Breite der mit dem Fahrerdach zu versehenen Straßenbaumaschine kann dabei ein geeignetes Zwischenteil verwendet werden.

Günstig ist es ferner, wenn eine Blende an einem Dachmodul montierbar ist. Dies bietet sich vor allem dann an, wenn ein Dachmodul unabhängig von dem anderem Dachmodul separat an der Straßenbaumaschine befestigbar ist. Die Blende kann dann anhand der ansonsten vom anderen Dachmodul abgedeckten Seite Schutz gegen Sonne oder Regen bieten.

Vorzugsweise ist an einem Dachmodul wenigstens ein Leuchtmittel vorgesehen, mittels dessen der Fahrerstand und/oder der Arbeitsbereich der Straßenbaumaschine ausgeleuchtet werden können. Bei diesen Leuchtmitteln kann es sich um Halogen-, Xenon- oder LED-Scheinwerfer oder andere geeignete Leuchtmittel handeln.

Als Material für das Fahrerdach haben sich Kunststoff, insbesondere glasfaserverstärkter Kunststoff (GFK), Verbundstoffe oder Metall als besonders vorteilhaft erwiesen.

Für eine feste Verbindung der beiden Dachmodule miteinander eignen sich besonders Schraub-, Schweiß- oder Nietverbindungen. Eine variablere Einsetzung des Fahrerdaches ergibt sich durch eine Scharnierverbindung zwischen den beiden Dachmodulen, durch die beispielsweise ein erstes Dachmodul auf das andere Dachmodul geschwenkt werden kann, um die Größe des Fahrerdaches zu verringern.

Die Erfindung bezieht sich ferner auf eine Straßenbaumaschine, insbesondere einen Straßenfertiger oder einen Beschicker für einen Straßenfertiger, die mit einem Fahrerdach der vorstehend beschriebenen Art ausgerüstet sind.

Darüber hinaus bezieht sich die Erfindung auch auf ein Baukastensystem zum Herstellen eines Fahrerdachs für den Bedienstand einer Straßenbaumaschine. Dieses die Effizienz der Herstellung des Fahrerdaches verbessernde Baukastensystem umfasst ein erstes und ein zweites Dachmodul sowie wenigstens ein Zwischenteil, das zwischen die beiden Dachmodule eingefügt werden kann. Wahlweise können aus diesem Baukastensystem entweder die beiden Dachmodule direkt miteinander verbunden werden, oder sie können unter Zwischenschaltung des wenigstens einen Zwischenteils miteinander verbunden werden.

Besonders vielseitig wird die Herstellung unterschiedlicher Fahrerdächer, wenn das Baukastensystem unterschiedliche Zwischenteile mit jeweils unterschiedlicher Breite aufweist.

Im Folgenden werden vorteilhafte Ausführungsbeispiele der Erfindung anhand einer Zeichnung näher erläutert. Im Einzelnen zeigen:
- Figur 1: ein erfindungsgemäßes Fahrerdach in perspektivischer Ansicht von vorne,
- Figur 2: das Fahrerdach aus Figur 1 in perspektivischer Ansicht von hinten,
- Figur 3: eine Untersicht des in Figur 1 und 2 gezeigten Fahrerdachs,
- Figur 4: eine perspektivische Ansicht des Fahrerdachs aus Figur 1 mit ausgezogenen Ausziehteilen,
- Figur 5: das in Figur 4 gezeigte Fahrerdach mit ausgezogenen Ausziehteilen in perspektivischer Ansicht von hinten,
- Figur 6: ein weiteres Ausführungsbeispiels eines Fahrerdachs mit eingefügtem Zwischenteil,
- Figur 7: ein weiteres Ausführungsbeispiel eines Fahrerdachs mit nur einem Dachmodul und
- Figur 8: eine schematische Darstellung einer Straßenbaumaschine mit einem Fahrerdach.

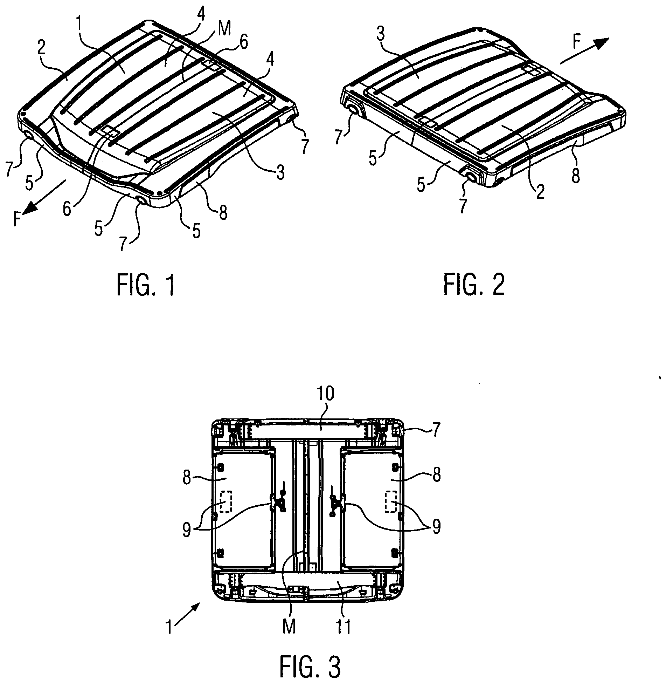

Figur 1 zeigt in perspektivischer Ansicht von schräg vorne ein Ausführungsbeispiel eines erfindungsgemäßen Fahrerdachs 1 für eine Straßenbaumaschine. Der Orientierung halber ist die übliche Fahrtrichtung F der Straßenbaumaschine in Form eines Pfeils eingezeichnet.

Das Fahrerdach 1 umfasst ein erstes Dachmodul 2 und ein zweites Dachmodul 3, die im vorliegenden Ausführungsbeispiel spiegelbildlich zueinander ausgebildet sind. Jedes Dachmodul 2, 3 verfügt über einen Dachabschnitt 4, von dem auf drei Seiten gegenüber dem Dachabschnitt 4 abgewinkelte Seitenteile 5 nach unten ragen. Diese Seitenabschnitte 5 bieten zusätzlichen Schutz gegen Regen und Sonne.

Entlang einer sich in Fahrtrichtung F erstreckenden Mittellinie M sind die beiden Dachmodule 2, 3 fest oder alternativ lösbar über Verbindungselemente 6 miteinander verbunden. Bei den Verbindungselementen 6 handelt es erfindungsgemäß um Scharniere. Bei einer Scharnierverbindung 6 wäre es denkbar, dass das eine Dachmodul 2 um die Mittelachse M auf das zweite Dachmodul 3 schwenkbar wäre.

Auf der Vorderseite und an den Seiten des Fahrerdaches 1 sind Leuchtmittel 7 vorhanden, bei denen es sich um LED-Scheinwerfer handeln kann. Ein Kabelbaum (nicht dargestellt) versorgt die Leuchtmittel 7 mit Strom.

Figur 2 zeigt eine rückseitige perspektivische Ansicht des in Figur 1 gezeigten Fahrerdaches. Dort ist zu erkennen, dass sich auch auf der Rückseite der beiden Dachmodule 2, 3 Leuchtmittel 7 befinden.

Figur 3 zeigt eine Untersicht des in den Figuren 1 und 2 gezeigten Fahrerdaches. Hier sind Ausziehteile 8 zu erkennen, die sich in Figur 3 in einer in das Fahrerdach 1 eingeschobenen Stellung befinden und dort mittels einer Verriegelung 9 verriegelt sind. Querbalken 10, 11 verbinden die beiden Dachmodule 2, 3 miteinander.

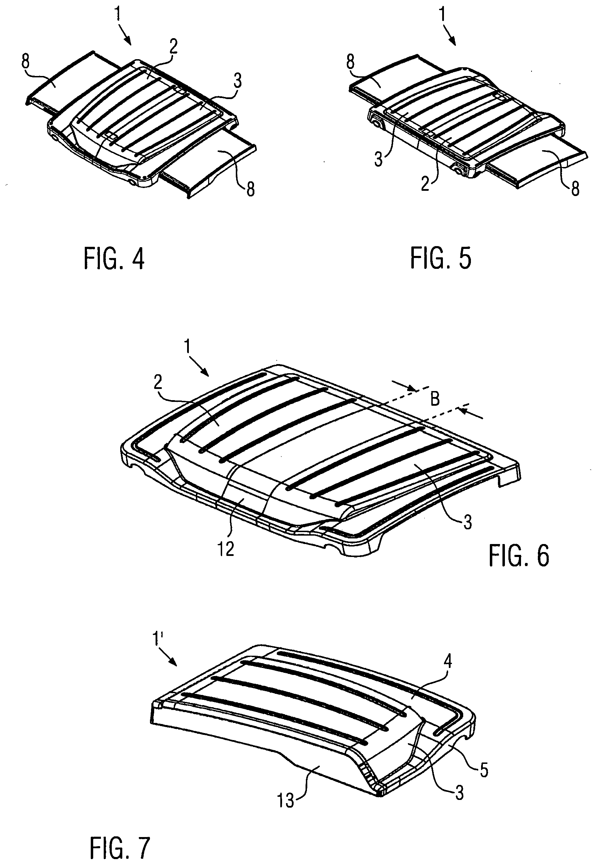

Figur 4 zeigt eine perspektivische Vorderansicht des in Figur 1 dargestellten Fahrerdaches 1, wobei nun jedoch die beiden Ausziehteile 8 in ihre ausgefahrene Stellung gebracht sind. In dieser ausgefahrenen Stellung vergrößern sie die effektive Breite des Fahrerdaches 1.

Figur 5 zeigt eine rückseitige perspektivische Ansicht des Fahrerdaches 1 mit ausgefahrenen Ausziehteilen beziehungsweise Markisen 8. Diese Ausziehteile beziehungsweise Markisen 8 können in Schienenführungen gleitbar gelagert sein.

Figur 6 zeigt ein zweites Ausführungsbeispiel eines erfindungsgemäßen Fahrerdaches 1. Dieses umfasst ebenfalls ein erstes Dachmodul 2 und ein zweites Dachmodul 3, die jeweils dieselbe Form wie das erste und zweite Dachmodul 2, 3 gemäß Figur 1 haben. Die Ausziehteile 8 und die Leuchtmittel sind nicht dargestellt. Zudem umfasst das Fahrerdach 1 gemäß Figur 6 ein Zwischenteil 12, das zwischen die beiden Dachmodule 2, 3 eingefügt und fest oder lösbar mit diesen verbunden ist. Das Zwischenteil 12 kann aus einem Baukastensystem ausgewählt sein, das mehrere Zwischenteile 12 unterschiedlicher Breite B aufweist. Dies ermöglicht es, durch Wahl eines bestimmten Zwischenstücks 12 die Gesamtbreite des Fahrerdaches 1 festzulegen und mit einfacher Lagerhaltung Fahrerdächer 1 unterschiedlicher Gesamtbreiten herzustellen.

Figur 7 zeigt ein weiteres Ausführungsbeispiels eines Fahrerdaches 1'. Dieses Fahrerdach umfasst nur eines der beiden Dachmodule 2, 3 - im vorliegenden Ausführungsbeispiel das in Fahrtrichtung linke, zweite Dachmodul 3. Das andere Dachmodul 2 wurde entfernt, um Platz für höhere Aufbauten auf der Straßenbaumaschine zu schaffen. Beispielsweise bietet sich dies an, wenn temporär Platz für ein Sprühmodul auf einem Sprüh-Straßenfertiger geschaffen werden soll. Auf der im Normalfall dem anderen Dachmodul 2 zugewandten und nicht mit einem Seitenabschnitt 5 versehenen Seite des Dachmoduls 3 kann nun insbesondere lösbar eine Blende 13 montiert sein, die nach unten vom Dachabschnitt 4 des Dachmoduls 3 absteht und die gleiche Funktion wie die Seitenteile 5 auf den übrigen Seiten wahrnimmt. Diese Ausführung kann mit oder auch ohne Ausziehteile 8 sein.

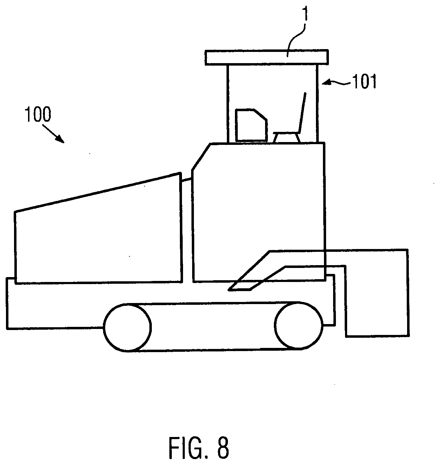

Figur 8 zeigt in schematischer Darstellung ein Ausführungsbeispiel einer erfindungsgemäßen Straßenbaumaschine 100 in Form eines Straßenfertigers mit einem erfindungsgemäßen Fahrerdach 1 für den Bedienstand 101 des Straßenfertigers 100.

In jedem Ausführungsbeispiel kann jedes der beiden Dachmodule 2, 3 unabhängig vom anderen Dachmodul 2, 3 mit oder ohne Ausziehteil 8 ausgebildet sein. Es ist also denkbar, dass das Fahrerdach 1 nur auf einer Seite oder auf beiden Seiten über ein Ausziehteil beziehungsweise eine Markise 8 verfügt, oder dass es auf keiner Seite ein Ausziehteil 8 aufweist. Wenn ein Dachmodul 2, 3 kein Ausziehteil 8 aufweist, ist seine parallel zur Fahrtrichtung F ausgerichtete Seite zweckmäßigerweise mit einem ebenso tief wie an den anderen Seiten nach unten gezogenen Seitenabschnitt 5 versehen, um insbesondere auf dieser Seite das Bedienpersonal gegen Witterungseinflüsse wie Regen, Schnee oder Sonne abzuschirmen.

## Patentansprüche

1. Fahrerdach (1) für einen Bedienstand (101) einer Straßenbaumaschine (100), umfassend ein erstes Dachmodul (2) und ein zweites Dachmodul (3), die fest oder lösbar zur Bildung eines gemeinsamen Fahrerdaches (1) miteinander verbunden sind,
**dadurch gekennzeichnet, dass**
die Dachmodule (2, 3) entlang einer sich in Fahrtrichtung (F) der Straßenbaumaschine (100) erstreckenden Mittellinie (M) mittels einer Scharnierverbindung (6) verbunden sind.

2. Fahrerdach nach Anspruch 1, **dadurch gekennzeichnet, dass** die beiden Dachmodule (2, 3) spiegelbildlich zueinander ausgebildet sind.

3. Fahrerdach nach einem der vorangehenden Ansprüche, **dadurch gekennzeichnet, dass** jedes Dachmodul (2, 3) jeweils einen Dachabschnitt (4) und mindestens einen gegenüber dem Dachabschnitt (4) abgewinkelten oder abgebogenen Seitenabschnitt (5) aufweist.

4. Fahrerdach nach Anspruch 3, **dadurch gekennzeichnet, dass** ein Dachmodul (2, 3) drei gegenüber dem Dachabschnitt (4) abgewinkelte oder abgebogene Seitenabschnitte (5) aufweist.

5. Fahrerdach nach einem der vorangehenden Ansprüche, **dadurch gekennzeichnet, dass** mindestens eines der ersten (2) und zweiten Dachmodule (3) ein Ausziehteil (8) umfasst, das zwischen einer eingeschobenen und einer ausgefahrenen Stellung bewegbar ist.

6. Fahrerdach nach Anspruch 5, **dadurch gekennzeichnet, dass** das Ausziehteil (8) in wenigstens einer Stellung verriegelbar ist.

7. Fahrerdach nach einem der vorangehenden Ansprüche, **dadurch gekennzeichnet, dass** mindestens eines der ersten (2) und zweiten Dachmodule (3) ohne Ausziehteil (8) ausgebildet ist.

8. Fahrerdach nach einem der vorangehenden Ansprüche, **dadurch gekennzeichnet, dass** das erste Dachmodul (2) um die Mittellinie (M) auf das zweite Dachmodul (3) schwenkbar ist.

9. Fahrerdach nach einem der vorangehenden Ansprüche, **dadurch gekennzeichnet, dass** eine zusätzliche Blende (13) an einem Dachmodul (2, 3) montierbar ist.

10. Fahrerdach nach einem der vorangehenden Ansprüche, **dadurch gekennzeichnet, dass** wenigstens ein Leuchtmittel (7) an wenigstens einem der beiden Dachmodule (2, 3) vorgesehen ist.

11. Fahrerdach nach einem der vorangehenden Ansprüche, **dadurch gekennzeichnet, dass** ein Dachmodul (2, 3) aus Kunststoff, einem Verbundstoff, Metall oder glasfaserverstärktem Kunststoff (GFK) gebildet ist.

12. Fahrerdach nach einem der vorangehenden Ansprüche, **dadurch gekennzeichnet, dass** ein Dachmodul (2, 3) mit einem anderen Dachmodul (2, 3) durch ein Scharnier fest verbunden ist.

13. Straßenbaumaschine (100) mit einem Fahrerdach (1) gemäß einem der vorangehenden Ansprüche.

14. Straßenbaumaschine nach Anspruch 13, **dadurch gekennzeichnet, dass** die Straßenbaumaschine (100) ein Straßenfertiger oder ein Beschicker für einen Straßenfertiger ist.

15. Baukastensystem zum Herstellen eines Fahrerdachs (1) für einen Bedienstand (101) einer Straßenbaumaschine (100), mit einem ersten Dachmodul (2) und einem zweiten Dachmodul (3) sowie wenigstens einem Zwischenteil (12), wobei die beiden Dachmodule (2, 3) in eine erste Konfiguration bringbar sind, in der sie direkt miteinander verbunden sind, und
in eine zweite Konfiguration bringbar sind, in der sie jeweils mit dem Zwischenteil (12) verbunden sind.

16. Baukastensystem nach Anspruch 15, **dadurch gekennzeichnet, dass** mehrere Zwischenteile (12) unterschiedlicher Konfiguration oder unterschiedlicher Breite vorhanden sind.

## Claims

1. Driver roof (1) for a control platform (101) of a road making machine (100), comprising a first roof module (2) and a second roof module (3) which are connected to each other permanently or detachably for forming a common driver roof (1),
**characterised in that**
the roof modules (2, 3) are connected to each other along a central line (M) extending in the direction of motion of the road making machine (100) via a hinge connection (6).

2. Driver roof according to claim 1, **characterized in that** the two roof modules (2, 3) are laterally reversed with respect to each other.

3. Driver roof according to one of the preceding claims, **characterized in that** each roof module (2, 3) comprises a roof section (4) and at least one lateral section (5) angled or bent with respect to the roof section (4).

4. Driver roof according to claim 3, **characterized in that** a roof module (2, 3) comprises three lateral sections (5) angled or bent with respect to the roof section (4).

5. Driver roof according to one of the preceding claims, **characterized in that** at least one of the first (2) and the second roof modules (3) comprises an extension part (8) which is movable between a retracted and an extended position.

6. Driver roof according to claim 5, **characterized in that** the extension part (8) is lockable in at least one position.

7. Driver roof according to one of the preceding claims, **characterized in that** at least one of the first (2) and second (3) roof modules is formed without an extension part (8).

8. Driver roof according to one of the preceding claims, **characterized in that** the first roof module (2) is tiltable about the central line (M) onto the second roof module (3).

9. Driver roof according to one of the preceding claims, **characterized in that** an additional cover (13) is mountable to a roof module (2, 3).

10. Driver roof according to one of the preceding claims, **characterized in that** at least one lighting means (7) is provided at at least one of the two roof modules (2, 3).

11. Driver roof according to one of the preceding claims, **characterized in that** a roof module (2, 3) is formed of plastics, a composite material, metal or glass-fiber reinforced plastics (GFRP).

12. Driver roof according to one the preceding claims, **characterized in that** one roof module (2, 3) is permanently connected with another roof module (2, 3) by a hinge.

13. Road making machine (100) with a driver roof (1) according to one of the preceding claims.

14. Road making machine according to claim 13, **characterized in that** the road making machine (100) is a road finishing machine or a feeder for a road finishing machine.

15. Modular system for manufacturing a driver roof (1) for a control platform (101) of a road making machine (100), with a first roof module (2) and a second roof module (3) and at least one intermediate part (12), wherein the two roof modules (2, 3) can be brought into a first configuration, in which they are directly connected to each other, and can be brought into a second configuration, in which they each are connected with the intermediate part (12).

16. Modular system according to claim 15, **characterized in that** several intermediate parts (12) of different configurations or different widths are available.

## Revendications

1. Toit de protection de conducteur (1) pour un poste de conduite (101) d'un engin de construction de routes (100), comprenant un premier module de toit (2) et un deuxième module de toit (3), qui sont reliés l'un à l'autre de manière fixe ou démontable en vue de former un toit de protection de conducteur (1) commun,
**caractérisé**
**en ce que** les modules de toit (2, 3) sont reliées le long d'une ligne médiane (M) s'étendant dans la direction de marche (F) de l'engin de construction de routes (100), au moyen d'une liaison par charnière (6).

2. Toit de protection de conducteur selon la revendication 1, **caractérisé en ce que** les deux modules de toit (2, 3) sont d'une configuration symétrique inverse l'un par rapport à l'autre.

3. Toit de protection de conducteur selon l'une des revendications précédentes, **caractérisé en ce que** chaque module de toit (2, 3) comprend respectivement un tronçon de toit (4) et au moins un tronçon latéral (5) coudé ou plié par rapport au tronçon de toit (4).

4. Toit de protection de conducteur selon la revendication 3, **caractérisé en ce qu'**un module de toit (2, 3) comprend trois tronçons latéraux (5) coudés ou pliés par rapport au tronçon de toit (4).

5. Toit de protection de conducteur selon l'une des revendications précédentes, **caractérisé en ce qu'**au moins un des premier (2) et deuxième modules de toit (3) comprend une partie extractible (8), qui peut être déplacée entre une position rétractée et une position d'extraction.

6. Toit de protection de conducteur selon la revendication 5, **caractérisé en ce que** la partie extractible (8) peut être verrouillée dans au moins une position.

7. Toit de protection de conducteur selon l'une des revendications précédentes, **caractérisé en ce qu'**au moins un des premier (2) et deuxième modules de toit (3) est réalisé sans partie extractible (8).

8. Toit de protection de conducteur selon l'une des revendications précédentes, **caractérisé en ce que** le premier module de toit (2) peut être rabattu par-dessus le deuxième module de toit (3), par pivotement autour de la ligne médiane (M).

9. Toit de protection de conducteur selon l'une des revendications précédentes, **caractérisé en ce qu'**un écran de protection supplémentaire (13) peut être monté sur un module de toit (2, 3).

10. Toit de protection de conducteur selon l'une des revendications précédentes, **caractérisé en ce qu'**au moins une source lumineuse (7) est prévue sur l'un au moins des deux modules de toit (2, 3).

11. Toit de protection de conducteur selon l'une des revendications précédentes, **caractérisé en ce qu'**un module de toit (2, 3) est réalisé en matière plastique, en un matériau composite, en métal ou en une matière plastique renforcée de fibres de verre (GFK).

12. Toit de protection de conducteur selon l'une des revendications précédentes, **caractérisé en ce qu'**un module de toit (2, 3) est relié de manière fixe à un autre module de toit (2, 3) par l'intermédiaire d'une charnière.

13. Engin de construction de routes (100) comprenant un toit de protection de conducteur (1) selon l'une des revendications précédentes.

14. Engin de construction de routes selon la revendication 13, **caractérisé en ce que** l'engin de construction de routes (100) est un finisseur de route ou un alimentateur pour un finisseur de route.

15. Système modulaire pour la réalisation d'un toit de protection de conducteur (1) pour le poste de conduite (101) d'un engin de construction de routes (100), comprenant un premier module de toit (2) et un deuxième module de toit (3), ainsi qu'au moins une partie intermédiaire (12), les deux modules de toit (2, 3) pouvant être amenés dans une première configuration dans laquelle ils sont reliés directement l'un à l'autre, et
dans une deuxième configuration dans laquelle ils sont reliés respectivement à la partie intermédiaire (12).

16. Système modulaire selon la revendication 15, **caractérisé en ce que** sont prévus plusieurs parties intermédiaires (12) de configuration différente ou de largeur différente.
